# FASCICULE DE BREVET EUROPEEN

(11) **EP 3 560 741 B1**
(45) Date de publication et mention de la délivrance du brevet: **30.09.2020**
(21) Numéro de dépôt: 18169047.0
(22) Date de dépôt: 24.04.2018
(51) Int. Cl.: B60J 1/16, B60J 7/02, B60J 7/04

(54) **DISPOSITIF D'OBTURATION D'UNE BAIE MÉNAGÉE DANS LA CARROSSERIE D'UN VÉHICULE, ET VÉHICULE CORRESPONDANT**
VORRICHTUNG ZUR ABDICHTUNG EINES IN DIE KAROSSERIE EINES FAHRZEUGS EINGELASSENEN ÖFFNUNGSFELDS, UND ENTSPRECHENDES FAHRZEUG
DEVICE FOR SEALING AN OPENING MADE IN THE BODY OF A VEHICLE, AND CORRESPONDING VEHICLE

(43) Date de publication de la demande: 30.10.2019
(73) Titulaire: Advanced Comfort Systems France SAS - ACS France, 79302 Bressuire Cedex (FR)
(72) Inventeur: GIRET, Frédéric, 79300 BOISME (FR); SEYNAT, Cédric, 79300 BREUIL-CHAUSSEE (FR)
(74) Mandataire: Vidon Brevets & Stratégie

(56) Documents cités:
- EP-A2- 2 479 366
- FR-A1- 2 833 213
- FR-A1- 2 924 739
- FR-A1- 2 963 282

## Description

### 1. Domaine de l'invention

Le domaine de l'invention est celui de l'équipement des baies, utilisées notamment dans les véhicules automobiles.

Plus précisément, l'invention concerne les dispositifs d'obturation d'une baie ménagée dans un élément de structure, par exemple dans la carrosserie d'un véhicule, ou dans une portière du véhicule, et comprenant une partie mobile coulissante susceptible de libérer ou de fermer une ouverture en offrant un aspect affleurant, vu de l'extérieur.

L'invention peut également équiper d'autres types de structures, tels que les caravanes, les camping-cars, les cars et bus, les minibus, les camions, les camionnettes, les bateaux,...

De tels dispositifs, développés depuis plusieurs années par le titulaire de la présente demande, sont notamment connus sous le terme "baie flush".

En d'autres termes, ces dispositifs sont conçus de façon à présenter, vu de l'extérieur, un aspect affleurant ou quasi-affleurant entre la carrosserie, ou plus généralement la paroi ou la structure, et le panneau fixe du dispositif.

### 2. Techniques de l'art antérieur

Le principe de cette technique est notamment décrit dans les documents de brevet EP-0 778 168 et EP-0 857 844, et sûrtout dans les documents FR2 924 739 et FR 2 833 213 avec des gorges de guidage de formes distinctes.

Le dispositif d'obturation (appelé par la suite "baie flush") présenté dans ces documents comprend une partie fixe et une partie mobile par rapport à cette partie fixe, ou panneau coulissant.

La partie mobile est reliée à l'ensemble fixe par des éléments fonctionnels qui assurent la mobilité requise et qui sont rapportés sur la face de la partie fixe tournée vers l'intérieur du véhicule.

Ces éléments fonctionnels, ou rails, assurent une fonction de guidage et de maintien du panneau mobile.

Ils sont placés sur la face orientée vers l'intérieur du véhicule, de façon suffisamment éloignés des bords, ou de la périphérie, de la partie fixe pour que cette périphérie puisse être solidarisée directement aux bords de la baie, sans que les rails n'interfèrent.

On peut ainsi s'affranchir de la présence d'un cadre de liaison entre les bords de la baie et la partie fixe.

Cette partie fixe peut être réalisée en un ou plusieurs éléments (placés les un à côté des autres dans un même plan), par exemple en verre ou en polycarbonate.

Une telle baie flush peut ainsi être montée intégralement indépendamment du véhicule, et rapportée, depuis l'extérieur, dans le logement défini à cet effet par la baie, ou le logement, définie dans la carrosserie, ou plus généralement dans la paroi.

Les bords de la partie fixe sont solidarisés, par exemple à l'aide d'un cordon de colle, aux bords de la baie, sans autre élément intermédiaire de liaison.

Sur le plan esthétique, la baie flush présente, vue de l'extérieur, un aspect lisse, affleurant, du fait qu'aucun cadre n'est nécessaire sur le contour de l'ouverture formée dans l'ensemble fixe.

Pour assurer un coulissement de la partie mobile, constituée généralement par un panneau transparent, on prévoit donc un dispositif de guidage comportant un premier et un second rails de guidage montés fixes sur la partie fixe (ou structure fixe) de la baie, de part et d'autre de l'ouverture fermée par le panneau mobile.

Celui-ci est monté sur les rails, pour coulisser par exemple selon une direction longitudinale, dans un plan de coulissement entre une (ou plusieurs) position d'ouverture et une position de fermeture, dans laquelle il obture l'ouverture.

Pour maximiser l'aspect affleurant, il a été proposé que, dans la position de fermeture, le panneau mobile s'inscrive dans le plan de la partie fixe, en passant d'une position intermédiaire de dégagement, dans le plan de coulissement, en regard de l'ouverture et dégagé de celle-ci à la position de fermeture.

On notera que le terme « plan » doit ici s'entendre dans une acception élargie : le plan formé par la baie est parfois courbe, selon une, voire deux, directions (ceci justifie également, dans certains cas, le terme « sensiblement » utilisé dans la description et les revendications).

### 3. Inconvénients des solutions de l'art antérieur

Les baies flush remportent un succès important, dans de nombreuses applications, du fait notamment de la simplicité de leur fabrication et de leur montage, et de l'aspect esthétique qu'elles permettent d'obtenir.

Lorsque le panneau mobile est fermé, l'étanchéité entre le panneau mobile et la partie fixe est assurée, classiquement, par un joint d'étanchéité.

Sur les baies actuelles, le panneau mobile se déplace selon un mouvement normal à son plan de forme (en Y pour une vitre latérale), les quatre coins du panneau mobile se déplaçant en même temps.

En d'autres termes, le joint d'étanchéité se décolle simultanément sur l'ensemble du bord du panneau mobile (le joint d'étanchéité est décollé en une seule fois)

En cas de gel, le joint d'étanchéité peut rester collé à la vitre fixe ce qui nécessite des efforts excessifs pour ouvrir la vitre portant le joint d'étanchéité.

Dans certains cas, il y a un risque de dégradation du joint d'étanchéité ou du mécanisme d'ouverture de la vitre.

### 4. Objectifs de l'invention

L'invention a donc notamment pour objectif de pallier les inconvénients de l'art antérieur cités ci-dessus.

Plus précisément, l'invention a pour objectif, dans au moins un mode de réalisation, de fournir un dispositif d'obturation d'une baie qui permette un verrouillage et un déverrouillage, et plus généralement une ouverture et une fermeture, aisés, intuitifs et sans effort important.

Un autre objectif de l'invention, selon au moins un mode de réalisation, est de fournir un dispositif d'obturation qui évite d'induire des effets néfastes et indésirables entre le panneau mobile et les moyens d'étanchéité associés.

L'invention a également pour objectif, selon au moins un mode de réalisation, de fournir une nouvelle technique de guidage d'un panneau mobile d'une baie d'obturation d'une structure, telle qu'un véhicule automobile ou similaire, permettant le passage d'une position d'obturation, affleurante avec le panneau fixe à une position de coulissement, qui soit simple, efficace et fiable.

Encore un autre objectif de l'invention , selon au moins un mode de réalisation, est de fournir une telle technique qui conserve, autant que faire se peut, tout ou partie des avantages des "baies flush" déjà développées par le titulaire de la présente demande, et notamment :
- aspect esthétique affleurant ;
- aspects aérodynamiques ;
- facilité et coût réduit de fabrication ;
- facilité et coût réduit de montage.

### 5. Exposé de l'invention

Ces objectifs, ainsi que d'autres qui apparaîtront par la suite, sont atteints à l'aide d'un dispositif d'obturation d'une baie ménagée dans une structure, comprenant une partie fixe, dans laquelle est définie une ouverture, et au moins un panneau mobile coulissant guidé le long de deux rails de guidage montés sur une face dudit panneau fixe, entre au moins une position d'obturation de ladite ouverture, dans un premier plan défini par ledit panneau fixe, dit plan d'obturation, et une position de coulissement, dans un second plan, dit plan de coulissement, sensiblement parallèle audit plan d'obturation,
chacun desdits rails de guidage portant au moins une navette guidée en translation dans ledit rail, chaque navette comprenant deux gorges de guidage ou deux pions fixes aptes à coopérer respectivement avec deux pions fixes ou deux gorges de guidage porté(e)s par ledit panneau mobile,
ledit dispositif d'obturation comprenant en outre des moyens d'actionnement agissant sur lesdites navettes pour assurer un déplacement en translation de ces dernières dans lesdits rails de guidage, et le passage du panneau mobile de ladite position d'obturation à ladite position de coulissement, et réciproquement.

Selon l'invention, pour chacune des rails de guidage, les deux gorges de guidage des pions du panneau mobile ou de la navette sont de formes distinctes de façon à assurer, lorsque les navettes sont déplacées dans lesdits rails à partir de la position d'obturation, le déplacement transversal par rapport auxdits rails d'une première partie du panneau mobile, puis le déplacement transversal par rapport auxdits rails de l'autre partie du panneau mobile, permettant le passage du panneau mobile dans une position intermédiaire de dégagement, dans le plan de coulissement, en regard de l'ouverture et dégagé de celle-ci.

Le trajet des pions de guidage du panneau mobile dans les deux gorges de guidage de chacune des navettes est différent.

On obtient ainsi un décalage du panneau mobile du plan d'obturation vers le plan de coulissement en deux temps, et par conséquent un décollage progressif (et non pas en une seule fois) du joint d'étanchéité porté par la partie fixe ou le panneau mobile, notamment en cas de gel.

On minimise ainsi les risques de dégradation du joint d'étanchéité ou du mécanisme d'ouverture du panneau mobile.

Selon un aspect particulier de l'invention, pour chacun des rails de guidage, une première gorge de guidage d'une navette ou du panneau mobile présente une première portion inclinée par rapport au plan de coulissement, permettant à partir de la position d'obturation le déplacement transversal par rapport auxdits rails d'une première partie du panneau mobile et une seconde portion s'étendant sensiblement parallèlement audit plan de coulissement, la deuxième gorge de guidage de ladite navette ou du panneau mobile présentant une première portion s'étendant sensiblement parallèlement audit plan de coulissement et une deuxième portion inclinée par rapport au plan de coulissement, permettant le déplacement transversal par rapport auxdits rails de l'autre partie du panneau mobile, permettant le passage du panneau mobile dans la position de coulissement.

Les deux gorges de guidage formées dans chacune des navettes des rails supérieur et inférieur sont configurées de sorte à déplacer la partie avant puis la partie arrière du panneau mobile de la position d'obturation vers la position de coulissement, dans le but d'agir progressivement sur le joint d'étanchéité, notamment en cas de gel.

Selon un aspect particulier de l'invention, les première et deuxième gorges de guidage d'une navette ou du panneau mobile sont symétriques par rapport à un point central situé à égale distance des deux gorges.

Selon un aspect particulier de l'invention, l'inclinaison de la deuxième portion inclinée de la deuxième gorge par rapport au plan de coulissement est supérieure à l'inclinaison de la première portion inclinée de la première gorge par rapport au plan de coulissement.

La différence d'inclinaison est, par exemple, comprise entre 1 et 5°.

Ce décalage permet de bloquer le panneau mobile en position ouverte de sorte à limiter les vibrations.

Selon un aspect particulier de l'invention, le dispositif d'obturation comprend des moyens de synchronisation, reliant les deux navettes équipant respectivement les deux rails, de façon que les deux navettes soient actionnées simultanément.

Selon un aspect particulier de l'invention, lesdits moyens de synchronisation comprennent au moins un câble ou un clinquant.

Selon une mise en œuvre particulière de l'invention, la partie fixe est muni de moyens d'étanchéité destinés à être placés en contact avec une périphérie dudit panneau mobile dans ladite position d'obturation.

Selon une autre mise en œuvre particulière de l'invention, le panneau mobile est muni de moyens d'étanchéité destinés à être placés en contact avec une périphérie de l'ouverture de la partie fixe dans ladite position d'obturation.

Selon un aspect particulier de l'invention, le dispositif d'obturation est monté sur une portière ou une portion latérale de carrosserie.

L'invention concerne également les véhicules automobiles comprenant au moins un dispositif d'obturation tel que décrit ci-dessus.

Ce dispositif peut notamment être monté sur une paroi latérale du véhicule ou une portière, ou former tout ou partie d'un pavillon.

Le terme « véhicule » automobile s'entend ici dans un sens large, et englobe notamment les camions, les camionnettes, cars, camping-cars,...

Un tel dispositif d'obturation peut également être adapté sur d'autres structures présentant des contraintes similaires, telles que les caravanes, les « mobile homes », les bateaux,...

### 6. Liste des figures

L'invention, ainsi que les différents avantages qu'elle présente, seront plus facilement compris grâce à la description qui va suivre, donnée à titre simplement illustratif et non limitatif en référence aux figures 1 à 5B, dans lesquelles :
- la figure 1 illustre un mode de réalisation d'un dispositif d'obturation, ou baie flush, selon l'invention ;
- la figure 2 est une vue partielle d'un dispositif d'obturation conforme à l'invention, montrant un exemple de navette apte à coulisser dans un rail de guidage et présentant des pistes avant et arrière aptes à coopérer avec des pions portés par le panneau mobile ;
- les figures 3A à 3C sont des vues de détail d'une navette se déplaçant dans un rail de guidage entre une position d'obturation du panneau mobile et une position de coulissement ;
- la figure 4A illustre un premier exemple de pistes avant (à gauche) et arrière (à droite) d'une navette mise en œuvre dans un dispositif d'obturation conforme à l'invention;
- la figure 4B illustre un deuxième exemple de pistes avant (à gauche) et arrière (à droite) d'une navette mise en œuvre dispositif d'obturation conforme à l'invention, et
- les figures 5A et 5B illustrent un autre exemple de forme des pistes avant et arrière de la navette inférieure (figure 5A) et de la navette supérieure (figure 5B).

### 7. Description détaillée de l'invention

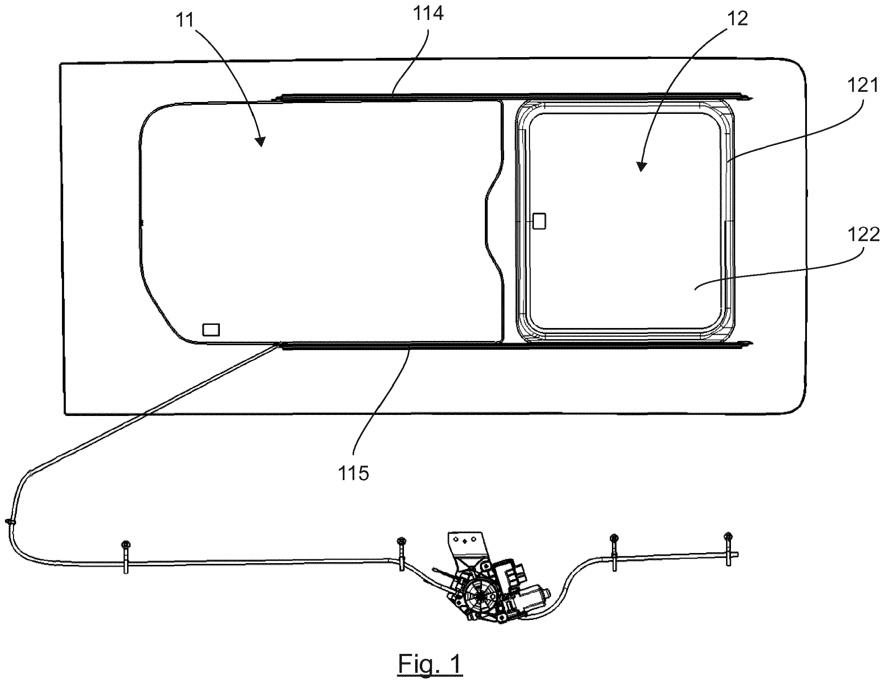

La figure 1 illustre une baie flush à panneau mobile en coulissement vue de l'intérieur du véhicule.

Une telle baie flush se présente sous la forme d'un ensemble, ou dispositif d'obturation, prêt à être placé dans une baie (c'est-à-dire une ouverture, ou un trou) ménagée dans la carrosserie (paroi latérale par exemple) ou une porte, ou plus généralement dans la structure d'un véhicule (ou d'une caravane ou d'un camping-car, par exemple), ou plus généralement d'une paroi devant recevoir un dispositif d'obturation muni d'un ouvrant.

Un tel dispositif d'obturation comprend une partie fixe 11, c'est-à-dire restant immobile par rapport à la structure qui la reçoit, et un panneau mobile en coulissement, ou panneau coulissant, 12, mobile par rapport à la partie fixe 11.

La partie fixe 11, encore appelée panneau fixe, peut notamment être réalisée en verre ou en polycarbonate, en un ou plusieurs éléments.

La partie fixe 11 est percée d'une ouverture obturée par le panneau mobile 12 dans la position de la figure 1 et s'étendant dans un même plan que la partie fixe 11.

Ce panneau mobile 12 comporte une portion vitrée 122, un cadre 121 et un dispositif de verrouillage / déverrouillage.

Des rails, respectivement un rail supérieur 114 et un rail inférieur 115, sont rapportés par collage sur la face de la partie fixe 11 orientée vers l'intérieur du véhicule.

On note que ces rails sont éloignés du contour de la partie fixe, et ne participent pas ni ne nuisent à la solidarisation de celle-ci au bord de la baie.

Les rails 114 et 115, qui sont sensiblement parallèle dans cet exemple, maintiennent et guident en coulissement le panneau mobile 12, qui présente un cadre 121 relié aux rails.

Le panneau mobile 12 peut être déplacé le long des rails 114, 115, dans un plan de coulissement sensiblement parallèle au plan défini par la partie fixe 11.

Le panneau mobile 12 peut venir obturer complètement l'ouverture de la partie fixe 11 (figure 1) ou libérer partiellement ou totalement cette ouverture.

Ainsi, le panneau mobile 12 peut prendre une ou plusieurs positions d'ouverture, selon sa position par rapport aux rails 114, 115.

Par ailleurs, le panneau mobile 12 peut se déplacer perpendiculairement au plan défini par la partie fixe 11, de façon à venir obturer l'ouverture, dans une position fermée (figure 1), dans laquelle elle affleure avec cette partie fixe 11, de façon à proposer un ensemble affleurant (carrosserie, partie fixe et partie mobile).

La face de la partie fixe 11 tournée vers l'intérieur du véhicule porte par ailleurs un joint d'étanchéité (non représenté sur la figure 1) collé sur le contour de l'ouverture, dont l'extrémité de la lèvre vient prendre appui sur le panneau mobile 12, lorsque celui-ci est en position d'obturation.

Dans une variante, le joint d'étanchéité peut être monté sur le cadre 121 du panneau mobile 12, pour venir en contact avec la partie fixe 11.

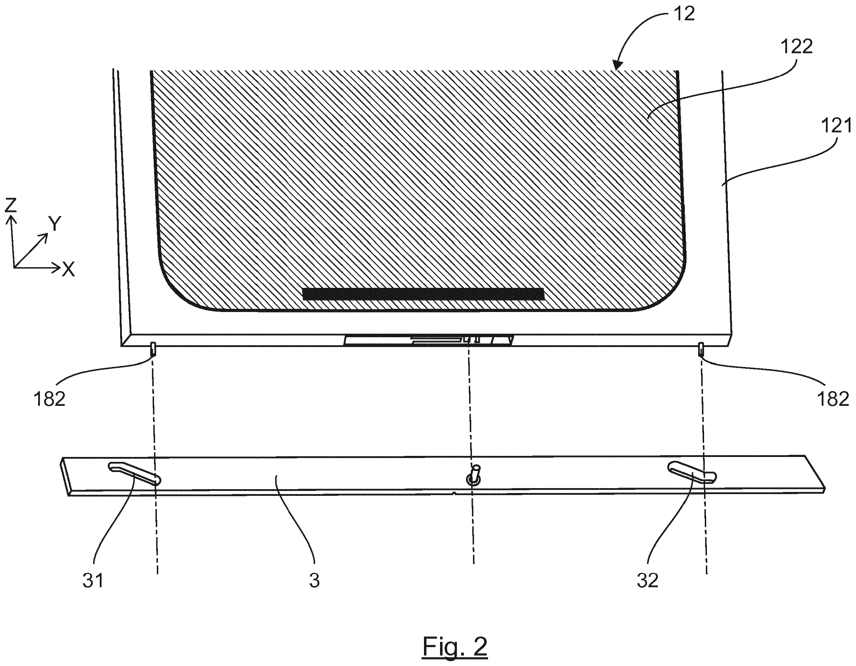

Dans ce mode de réalisation, le rail supérieur 114 porte une navette (non visible sur les figures) et le rail inférieur 115 porte une navette 3 (visible sur la figure 2), chacune des navettes portant deux gorges situées au voisinage respectivement de chaque bord latéral du panneau mobile 12 et coopérant avec un pion avant et arrière solidaire d'un bord du panneau mobile.

Chaque navette 3 est ainsi guidée en coulissement dans un rail 114, 115, selon un axe parallèle à l'axe X, c'est-à-dire l'axe correspondant à la longueur du véhicule.

Les différents mouvements du panneau mobile 12 sont contrôlés à partir de moyens de mise en mouvement des navettes 3 à l'intérieur des rails de guidage 114, 115.

La figure 2 illustre schématiquement un exemple de navette 3 apte à coulisser dans un rail de guidage et présentant des pistes avant et arrière aptes à coopérer avec des pions portés par le panneau mobile.

Elle est destinée à se déplacer dans le rail inférieur 115. Une navette similaire, de préférence synchronisée, est prévue dans le rail supérieur 114.

Cette navette 3 se présente sous la forme d'un barreau de dimensions adaptées pour coulisser dans le rail inférieur 115.

Pour chaque navette 3, une piste, dite piste avant, ou gorge de guidage, 31 contrôle le déplacement de la partie distale du panneau mobile 12 (la plus proche de l'avant du véhicule) et une piste, dite piste arrière, 32 contrôle le déplacement de la partie proximale de ce même panneau mobile 12, opposée à la partie distale.

Dans l'exemple illustré, le cadre 121 du panneau mobile 12 porte deux pions de guidage supérieurs (non visibles) et deux pions de guidage inférieurs 182 prévus pour coopérer avec une piste correspondante formée respectivement dans les navettes 3 du rail supérieur 114 et du rail inférieur 115, pour contrôler la fermeture et l'ouverture du panneau mobile 12, c'est-à-dire son déplacement dans une direction perpendiculaire à l'axe de coulissement (classiquement l'axe Y du véhicule, correspondant à sa largeur)

Un pion 182 de guidage inférieur est ainsi solidaire de la partie distale du panneau mobile 12 et un autre pion 182 de guidage inférieur est solidaire de la partie proximale du panneau mobile 12, opposée à la partie distale.

Le mouvement des navettes 3 le long des rails de guidage 114, 115 est assuré par le biais de câbles de commande, de type "push pull", eux même entraînés par des moyens motorisés commandés par un utilisateur.

Les navettes 3 supérieure et inférieure sont reliées par un câble ou clinquant.

Comme illustré sur la figure 2, dans chacune des pistes 31, 32 se déplacent les pions 182 inférieurs portés par le panneau mobile 12 qui contrôlent le déplacement de ce dernier, et notamment la fermeture et l'ouverture du panneau mobile.

Le mouvement du panneau mobile 12 par rapport à la partie fixe 11 peut se décomposer en deux déplacements indépendants :
- un déplacement perpendiculaire vers l'intérieur du véhicule en deux temps par rapport au plan formé par la partie fixe 11, permettant le passage d'une position fermée et verrouillée, dans laquelle le panneau mobile 12 se trouve dans le même plan que la partie fixe 11 et l'ouverture, à une position intermédiaire de dégagement, dans laquelle le panneau mobile 12 est décalé par rapport à la partie fixe 11 en regard de l'ouverture et dégagé de celle-ci, dans un plan de coulissement, de façon à permettre ce coulissement - le panneau mobile 12 est ainsi mobile selon une direction de déverrouillage perpendiculaire à la direction de coulissement;
- un déplacement dans le plan de coulissement, parallèle au plan formé par la partie fixe 11.

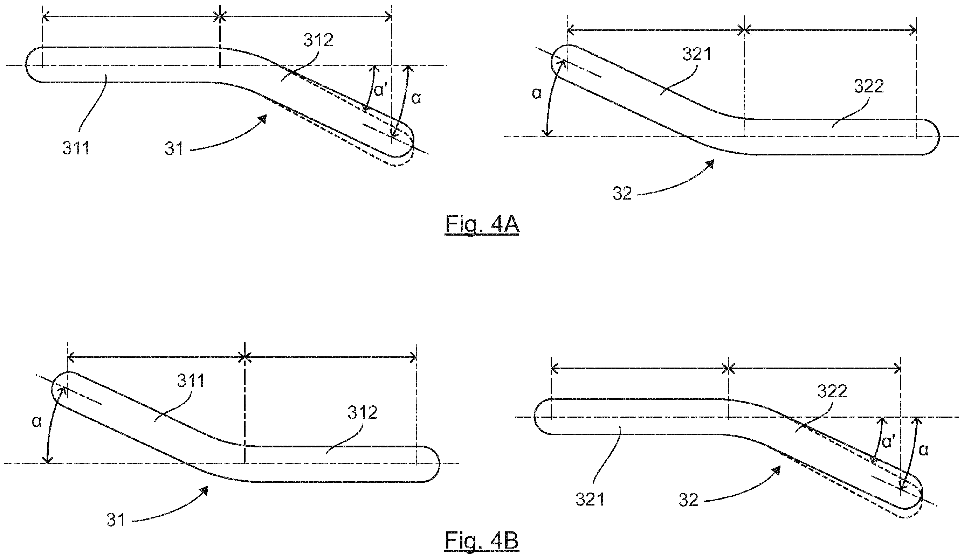

La figure 4A illustre un exemple de forme des pistes avant 31 et arrière 32 de cette navette 3 inférieure.

La piste avant 31 comprend une portion rectiligne 311, s'étendant parallèlement à l'axe de coulissement et correspond à la position d'obturation du bord avant du panneau mobile 12. Elle comprend également une portion inclinée 312 formant, par rapport à cet axe de coulissement, un angle α de l'ordre de 25°. Cette portion inclinée 312 permet de contrôler le changement de position du bord avant du panneau mobile 12.

La piste arrière 32 comprend également une portion inclinée 321 formant, par rapport à cet axe de coulissement, un angle α de l'ordre de 25°. Cette portion inclinée 321 permet de contrôler le changement de position du bord arrière du panneau mobile. Elle comprend également une portion rectiligne 322 s'étendant parallèlement à l'axe de coulissement.

Les pions 182 portés par le bord inférieur du panneau mobile 12 sont, dans la position d'obturation ou fermée du panneau mobile 12, en butée à l'extrémité fermée de la portion rectiligne 311 de la piste avant 31 et en butée à l'extrémité fermée de la portion inclinée 321 de la piste arrière 32.

La navette 3 supérieure présente les mêmes pistes avant et arrière que la navette inférieure, des pions 182 portés par le bord supérieur du panneau mobile 12 coopérant avec chacune de ces pistes 31, 32.

Ainsi, quatre pistes au total sont mises en œuvre dans les navettes (et non pas dans les rails), dont deux pistes avant et deux pistes arrière.

Pour chacune des navettes 3 supérieure et inférieure, les pistes avant 31 et arrière 32 sont de formes distinctes et symétriques par rapport à un point central situé à égale distance des pistes avant 31 et arrière 32.

A partir de la position fermée du panneau mobile 12, le moteur tire le câble et les navettes 3 inférieure et supérieure.

Les pions 182 inférieur et supérieur du panneau mobile 12 se déplacent alors dans les pistes avant et arrière des navettes inférieure et supérieure.

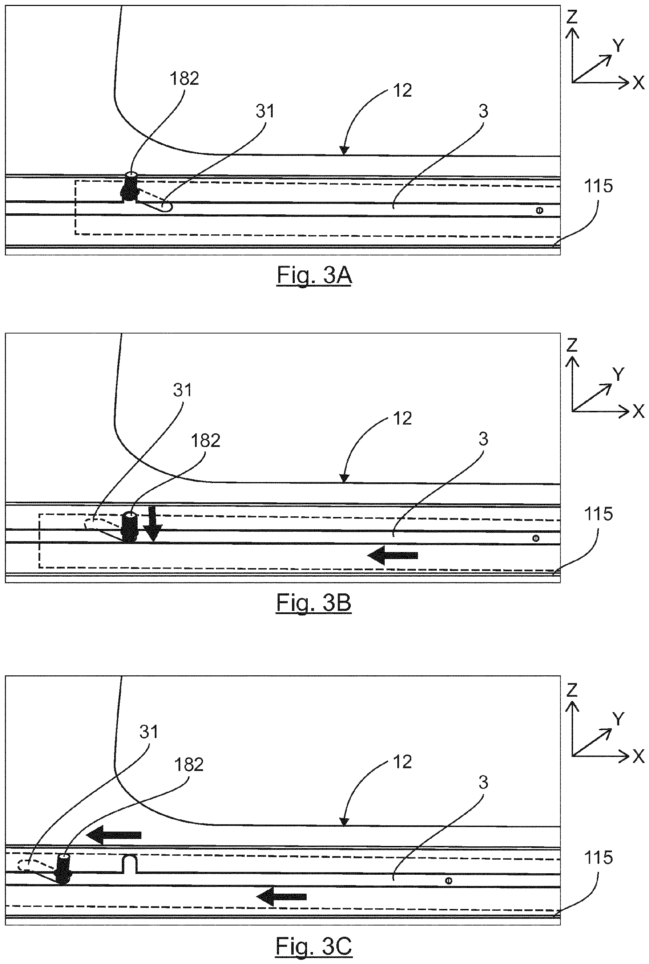

Sur la figure 3B, la navette 3 inférieure s'est déplacée de la droite vers la gauche comme illustré par la flèche horizontale.

Le pion 182 coopérant avec la piste avant 31 s'est déplacé le long de la portion rectiligne 311, alors que le pion 182 coopérant avec la piste arrière 32 s'est déplacé dans la portion inclinée 321 décalant immédiatement et progressivement en Y le bord arrière du panneau mobile 12 (la même cinématique s'appliquant pour la navette supérieure). Le bord avant du panneau mobile 12 reste dans le plan du panneau fixe 11 et ne se décale donc pas en Y, le pion 182 coopérant avec la piste avant 31 se déplaçant le long de la portion rectiligne 311.

On peut par une consigne électronique arrêter le moteur (et donc le déplacement des navettes 3 inférieure et supérieure) dans cette position intermédiaire. Lorsque le moteur continue de tirer les navettes 3 inférieure et supérieure, le pion 182 coopérant avec la piste avant 31 se déplace dans la portion inclinée 312 décalant alors le bord avant du panneau mobile 12, le pion 182 coopérant avec la piste arrière 32 se déplaçant dans la portion rectiligne 322.

C'est donc le bord arrière du panneau mobile 12 qui se décale d'abord en Y, puis le bord avant.

Les pions 182 portés par le bord inférieur du panneau mobile 12 sont, dans la position ouverte du panneau mobile, en butée à l'extrémité fermée de la portion inclinée 312 de la piste avant 31, comme illustré sur la figure 3B, et en butée à l'extrémité fermée de la portion rectiligne 322 de la piste arrière 32.

Sur la figure 3B, l'ouverture est terminée. Le panneau mobile 12 est dans une position intermédiaire de dégagement, c'est-à-dire qu'il se retrouve dans le plan de coulissement, parallèle à la vitre fixe 11, et en face de l'ouverture ménagée dans cette dernière.

Une fois l'ensemble du panneau mobile 12 décalé en Y, le déplacement de la navette 3 de la droite vers la gauche entraîne le coulissement en X du panneau mobile 12, dans le plan de coulissement, de la droite vers la gauche.

Le panneau mobile 12 coulisse le long des rails 114, 115 jusqu'à une position extrême dite d'ouverture maximale.

Par une consigne électronique, le moteur et le panneau mobile 12 coulissant peuvent s'arrêter dans une position intermédiaire de coulissement quelconque.

Le passage d'une position ouverte à la position d'obturation se fait de façon symétrique (de la figure 3C à la figure 3A). Ainsi, le moteur déplace les navettes de la gauche vers la droite et une fois le panneau mobile 12 situé en regard de l'ouverture, le bord avant du panneau mobile 12 se décale en Y, puis le bord arrière.

D'autres angles, et le cas échéant des formes légèrement différentes, par exemple incurvées, peuvent être envisagées pour les pistes 31, 32.

La figure 4B montre la forme des pistes avant 31 et arrière 32 de la navette 3 inférieure selon une variante de réalisation.

La piste avant 31 comprend une portion inclinée 311 formant, par rapport à cet axe de coulissement, un angle α de l'ordre de 25°. Cette portion inclinée 311 permet de contrôler le changement de position du bord avant du panneau mobile 12. Elle comprend également une portion rectiligne 312 s'étendant parallèlement à l'axe de coulissement.

La piste arrière 32 comprend une portion rectiligne 321, s'étendant parallèlement à l'axe de coulissement et correspond à la position d'obturation du bord avant du panneau mobile. Elle comprend également une portion inclinée 322 formant, par rapport à cet axe de coulissement, un angle α de l'ordre de 25°. Cette portion inclinée 322 permet de contrôler le changement de position du bord arrière du panneau mobile 12.

C'est donc le bord avant du panneau mobile 12 qui se décale en Y, puis le bord arrière à partir de la position d'obturation du panneau mobile 12.

Lorsque seule la partie avant du panneau mobile 12 est ouverte, l'intérieur du véhicule peut être aéré par dépression lorsque le véhicule est en mouvement (avec un effet similaire à la position entrebâillée de ventilation, dite "tilt" en anglais, d'un toit ouvrant).

L'invention permet ainsi un décollage progressif du joint d'étanchéité.

Pour ce faire, on ouvre d'abord la moitié avant ou arrière du panneau mobile 12, puis l'autre moitié. En d'autres termes, on décale le panneau mobile 12 en deux temps.

On répartit de la sorte les efforts sur une zone plus petite du joint d'étanchéité.

En cas de gel, on décolle le joint d'étanchéité sur un côté d'abord du panneau mobile 12 pour décomprimer le joint, puis sur l'autre côté.

Selon une mise en œuvre particulière de l'invention, l'extrémité fermée de la portion inclinée 312 de la piste avant 31 peut être légèrement décalée par rapport à celle illustrée en traits pleins sur la figure 4A. L'angle d'inclinaison α' de la portion inclinée 312 représentée en traits pointillés est ainsi égal à 28° au lieu de 25°.

Dans l'exemple de la figure 4B, l'angle d'inclinaison α' de la portion inclinée 322 de la piste arrière 32 représentée en traits pointillés est égal à 28° au lieu de 25°.

Cette légère déformation permet d'introduire un frottement ou une contrainte en fin d'ouverture du panneau mobile 12 de sorte à caler/bloquer ce dernier et éviter les vibrations et bruits (sans ajout de pièce donc économique).

Dans un autre mode de réalisation, pour chaque rail de guidage, chaque navette comprend deux pions fixes aptes à coopérer avec deux gorges portées par un bord dudit panneau mobile.

Ainsi, pour le rail supérieur, la navette correspondante porte deux pions fixes aptes à coopérer avec deux gorges portées par le bord supérieur du panneau mobile. Pour le rail inférieur, la navette correspondante porte deux pions fixes aptes à coopérer avec deux gorges portées par le bord inférieur du panneau mobile.

Préférentiellement, le déplacement du panneau mobile est optimisé à l'aide de moyens de synchronisation assurant le déplacement des navettes supérieure et inférieure de façon synchronisée sous l'action d'une commande unique.

L'invention peut également être mise en œuvre, bien sur, en l'absence de tels moyens de synchronisation.

Ces moyens de synchronisation peuvent par exemple comprendre au moins un câble ou un clinquant

Pour ouvrir le panneau mobile, on peut agir manuellement, par le biais d'une poignée par exemple, sur les moyens de synchronisation des deux navettes.

Ce déplacement des navettes peut également être motorisé, la commande électrique par câble agissant sur une des navettes qui par le biais des moyens de synchronisation assure le déplacement de l'autre navette.

Les modes de réalisation décrits ci-dessus s'appliquent à une paroi latérale d'un véhicule automobile.

L'invention peut s'appliquer de la même façon à d'autres structures présentant une paroi dans laquelle est définie une baie, comme, par exemple, une caravane ou un camping-car.

Notamment, la baie peut être formée dans une paroi latérale du véhicule (par exemple pour les véhicules utilitaires, les monospaces, les breaks,...), dans une paroi orientée vers l'arrière du véhicule (par exemple pour les « pick-up »), ou encore dans une portière.

Il peut également s'agir d'une baie de séparation d'un véhicule.

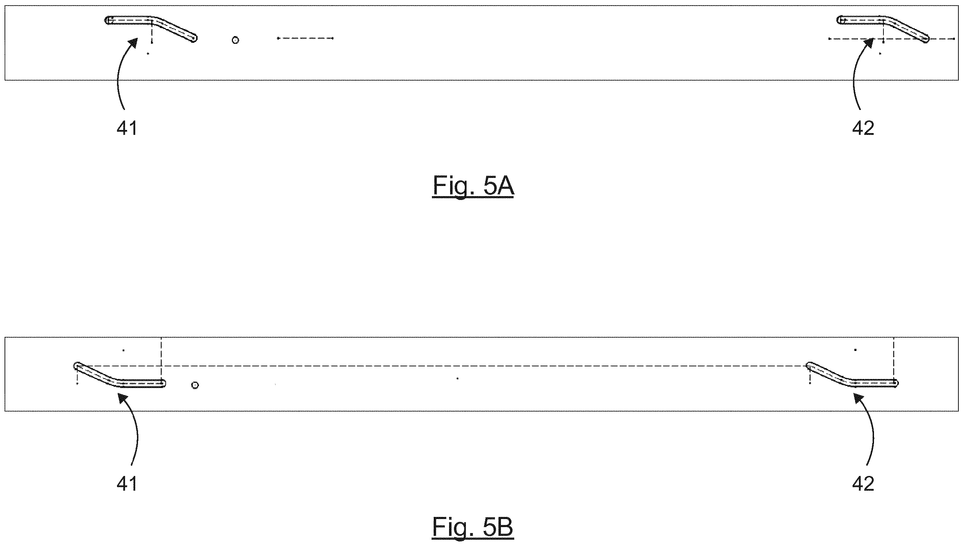

La figure 5A illustre un autre exemple de forme des pistes avant 41 et arrière 42 de la navette 3 inférieure.

La figure 5B illustre la forme des pistes avant 41 et arrière 42 de la navette 3 supérieure.

Dans cet exemple des figures 5A et 5B, sur une même navette (supérieure ou inférieure), les deux pistes 41, 42 sont identiques. Chaque piste comprend ainsi une portion rectiligne s'étendant parallèlement à l'axe de coulissement et une portion inclinée par rapport à l'axe de coulissement.

Dans ce cas de figure, c'est le bord supérieur du panneau mobile 12 qui se décale d'abord en Y, puis le bord inférieur.

La position intermédiaire (bord supérieur ouvert) permet d'aérer le véhicule à l'arrêt tout en protégeant l'intérieur du véhicule d'une légère pluie.

## Revendications

1. Dispositif d'obturation d'une baie ménagée dans une structure, comprenant une partie fixe (11), dans laquelle est définie une ouverture, et au moins un panneau mobile (12) coulissant guidé le long de deux rails de guidage (114) montés sur une face dudit panneau fixe (11), entre une position d'obturation de ladite ouverture, dans un premier plan défini par ledit panneau fixe (11), dit plan d'obturation, et au moins une position de coulissement, dans un second plan, dit plan de coulissement, sensiblement parallèle audit plan d'obturation, chacun desdits rails de guidage (114) portant au moins une navette (3) guidée en translation dans ledit rail (114), chaque navette (3) comprenant deux gorges de guidage ou deux pions (182) fixes aptes à coopérer respectivement avec deux pions (182) fixes ou deux gorges de guidage porté(e)s par ledit panneau mobile (12), ledit dispositif d'obturation comprenant en outre des moyens d'actionnement agissant sur lesdites navettes (3) pour assurer un déplacement en translation de ces dernières dans lesdits rails de guidage (114), et le passage du panneau mobile (12) de ladite position d'obturation à ladite au moins une position de coulissement, et réciproquement, ledit dispositif d'obturation étant **caractérisé en ce que**, pour chacun desdits rails de guidage (114), les deux gorges de guidage des pions (182) du panneau mobile (12) ou de la navette (3) sont de formes distinctes de façon à ce que le trajet des pions de guidage dans les deux gorges de guidage soit différent et de façon à assurer, lorsque les navettes (3) sont déplacées dans lesdits rails (114) à partir de la position d'obturation, le déplacement transversal par rapport auxdits rails (114) d'une première partie du panneau mobile (12), puis le déplacement transversal par rapport auxdits rails (114) de l'autre partie du panneau mobile (12), permettant le passage du panneau mobile (12) dans une position intermédiaire de dégagement, dans le plan de coulissement, en regard de l'ouverture et dégagé de celle-ci.

2. Dispositif d'obturation selon la revendication 1, **caractérisé en ce que**, pour chacun desdits rails de guidage, une première gorge de guidage d'une navette ou dudit panneau mobile présente une première portion inclinée par rapport au plan de coulissement, permettant à partir de la position d'obturation le déplacement transversal par rapport auxdits rails d'une première partie du panneau mobile et une seconde portion s'étendant sensiblement parallèlement audit plan de coulissement, la deuxième gorge de guidage de ladite navette ou dudit panneau mobile présentant une première portion s'étendant sensiblement parallèlement audit plan de coulissement et une deuxième portion inclinée par rapport au plan de coulissement, permettant le déplacement transversal par rapport auxdits rails de l'autre partie du panneau mobile, permettant le passage du panneau mobile dans la position de dégagement.

3. Dispositif d'obturation selon la revendication 1 ou 2, **caractérisé en ce que** les première et deuxième gorges de guidage d'une navette ou dudit panneau mobile sont symétriques par rapport à un point central situé à égale distance des deux gorges.

4. Dispositif d'obturation selon la revendication 1 ou 2, **caractérisé en ce que** l'inclinaison de la deuxième portion inclinée de la deuxième gorge par rapport au plan de coulissement est supérieure à l'inclinaison de la première portion inclinée de la première gorge par rapport au plan de coulissement.

5. Dispositif d'obturation selon l'une des revendications 1 à 4, **caractérisé en ce qu'**il comprend des moyens de synchronisation, reliant les deux navettes équipant respectivement les deux rails, de façon que les deux navettes soient actionnées simultanément.

6. Dispositif d'obturation selon la revendication 5, **caractérisé en ce que** lesdits moyens de synchronisation comprennent au moins un câble ou un clinquant.

7. Dispositif d'obturation selon l'une des revendications 1 à 6, **caractérisé en ce que** la partie fixe est muni de moyens d'étanchéité destinés à être placés en contact avec une périphérie dudit panneau mobile dans ladite position d'obturation.

8. Dispositif d'obturation selon l'une des revendications 1 à 6, **caractérisé en ce que** le panneau mobile est muni de moyens d'étanchéité destinés à être placés en contact avec une périphérie de l'ouverture de la partie fixe dans ladite position d'obturation.

9. Véhicule automobile **caractérisé en ce qu'**il comprend au moins un dispositif d'obturation selon l'une quelconque des revendications 1 à 8.

## Patentansprüche

1. Vorrichtung zum Verschließen einer in einer Struktur ausgebildeten Öffnung, die einen festen Teil (11), in dem eine Öffnung definiert ist, und mindestens ein bewegliches Paneel (12) aufweist, das entlang zweier Führungsschienen (114), die auf einer Seite des festen Paneels (11) befestigt sind, zwischen einer Verschlussposition der Öffnung in einer von dem festen Paneel (11) definierten ersten Ebene, die Verschlussebene genannt wird, und mindestens einer Verschiebeposition in einer zweiten Ebene, die Verschiebeebene genannt wird, die im Wesentlichen parallel zu der Verschlussebene ist, geführt verschiebbar ist, wobei jede der Führungsschienen (114) mindestens ein Schiffchen (3) aufweist, das in der Schiene (114) translatorisch geführt ist, wobei jedes Schiffchen (3) zwei Führungsnuten oder zwei feste Stifte (182) trägt, die geeignet sind, jeweils mit zwei festen Stiften (182) oder zwei Führungsnuten zusammenzuwirken, die von dem beweglichen Paneel (12) getragen sind, wobei die Vorrichtung zum Verschließen ferner Betätigungsmittel aufweist, die auf die Schiffchen (3) einwirken, um eine translatorische Verschiebung dieser Letzteren in den Führungsschienen (114) und den Übergang des beweglichen Paneels (12) von der Verschlussposition in die mindestens eine Verschiebeposition und umgekehrt zu gewährleisten, wobei die Vorrichtung zum Verschließen **dadurch gekennzeichnet ist, dass** für jede der Führungsschienen (114) die zwei Führungsnuten (182) des beweglichen Paneels (12) oder des Schiffchens (3) derart verschiedencgeformt sind, dass der Weg der Führungsstifte in den zwei Führungsnuten verschieden ist und dass dann, wenn die Schiffchen (3) in den Führungsschienen (114) ausgehend von der Verschlussposition verschoben werden, zunächst die translatorische Verschiebung in Bezug auf die Schienen (114) eines ersten Teils des beweglichen Paneels (12), und dann die translatorische Verschiebung in Bezug auf die Schienen (114) des anderen Teils des beweglichen Paneels (12) gewährleistet wird, wodurch der Übergang des beweglichen Paneels (12) in eine Nichteingriffs-Zwischenposition in der Gleitebene, gegenüber von der Öffnung und nicht mit ihr im Eingriff, ermöglicht wird.

2. Vorrichtung zum Verschließen nach Anspruch 1, **dadurch gekennzeichnet, dass** für jede der Führungsschienen eine erste Führungsnut eines Schiffchens oder des beweglichen Paneels einen zu der Verschiebeebene geneigten ersten Abschnitt, der das translatorische Verschieben in Bezug auf die Schienen eines ersten Teils des beweglichen Paneels ausgehend von der Verschlussposition ermöglicht, und einen zweiten Abschnitt aufweist, der sich im Wesentlichen parallel zu der Verschiebeebene erstreckt, wobei die zweite Führungsnut des Schiffchens oder des beweglichen Paneels einen sich im Wesentlichen parallel zu der Verschiebeebene erstreckenden ersten Abschnitt, und einen zu der Verschiebeebene geneigten zweiten Abschnitt aufweist, der das translatorische Verschieben in Bezug auf die Schienen des anderen Teils des beweglichen Paneels ermöglicht, wodurch der Übergang des beweglichen Paneels in die Position des Nichteingriffs ermöglicht wird.

3. Vorrichtung zum Verschließen nach Anspruch 1 oder 2, **dadurch gekennzeichnet, dass** die erste und die zweite Führungsnut eines Schiffchens oder des beweglichen Paneels in Bezug auf einen Mittelpunkt symmetrisch sind, der sich im gleichen Abstand zu den zwei Nuten befindet.

4. Vorrichtung zum Verschließen nach Anspruch 1 oder 2, **dadurch gekennzeichnet, dass** die Neigung des zweiten geneigten Abschnitts der zweiten Nut in Bezug auf die Verschiebeebene größer ist als die Neigung des ersten geneigten Abschnitts der ersten Nut in Bezug auf die Verschiebeebene.

5. Vorrichtung zum Verschließen nach einem der Ansprüche 1 bis 4, **dadurch gekennzeichnet, dass** sie Mittel aufweist, welche die zwei Schiffchen verbinden, mit denen jeweils die zwei Schienen ausgestattet sind, zur Synchronisation derart, dass die zwei Schiffchen gleichzeitig betätigt werden.

6. Vorrichtung zum Verschließen nach Anspruch 5, **dadurch gekennzeichnet, dass** die Synchronisiermittel mindestens ein Kabel oder eine Klinge aufweisen.

7. Vorrichtung zum Verschließen nach einem der Ansprüche 1 bis 6, **dadurch gekennzeichnet, dass** der feste Teil mit Dichtungsmitteln versehen ist, die dazu bestimmt sind, in Kontakt mit einem Rand des beweglichen Paneels in der Verschlussposition angeordnet zu werden.

8. Vorrichtung zum Verschließen nach einem der Ansprüche 1 bis 6, **dadurch gekennzeichnet, dass** das bewegliche Paneel mit Dichtungsmitteln versehen ist, die dazu bestimmt sind, in der Verschlussposition mit einem Rand der Öffnung des festen Teils in Kontakt gebracht zu werden.

9. Kraftfahrzeug, **dadurch gekennzeichnet, dass** es mindestens eine Vorrichtung zum Verschließen nach einem der Ansprüche 1 bis 8 aufweist.

## Claims

1. Device for sealing an opening made in a structure, comprising a fixed part (11), in which an opening is defined, and at least one sliding moving panel (12) guided along two guide rails (114) mounted on a surface of said fixed panel (11), between a position for sealing said opening, in a first plane defined by said fixed panel (11), referred to as the sealing plane, and at least one sliding position, in a second plane, referred to as the sliding plane, substantially parallel to said sealing plane, each of said guide rails (114) carrying at least one shuttle (3) guided during movement in said rail (114), each shuttle (3)comprising two guide grooves or two fixed pins (182) able to cooperate respectively with two fixed pins (182) or guide grooves carried by said moving panel (12), said sealing device further comprising actuating means acting on said shuttles (3) to ensure a translatory movement of the latter in said guide rails (114), and the transition of the moving panel (12) from said sealing position to said at least one sliding position, and vice versa, said sealing device being **characterised in that**, for each of said guide rails (114), the two guide grooves for the pins (182) of the moving panel (12) or of the shuttle (3) are of different shapes in order to ensure that the trajectory of the pins in the guide grooves is different and in order to ensure, when the shuttles (3) are moved in said rails (114) from the sealing position, the transverse movement in relation to said rails (114) of a first section of the moving panel (12), then the transverse movement in relation to said rails (114) of the other section of the moving panel (12), allowing the transition of the moving panel (12) into an intermediate release position, in the sliding plane, facing the opening and disengaged therefrom.

2. Sealing device according to claim 1, **characterised in that** for each of said guide rails, a first guide groove of a shuttle or of said moving panel has a first portion inclined with respect to the sliding plane, allowing the transverse movement from the sealing position with respect to said rails of a first section of the moving panel and a second portion extending substantially parallel to the sliding plane, the second guide groove of said shuttle or said moving panel having a first portion extending substantially parallel to said sliding plane and a second portion inclined with respect to the sliding plane, allowing the transverse movement with respect to said rails of the other section of the moving panel, allowing the transition of the moving panel into the release position.

3. Sealing device according to claim 1 or 2, **characterised in that** the first and second guide grooves of a shuttle or of said moving panel are symmetrical with respect to a central point situated equidistantly from the two grooves.

4. Sealing device according to claim 1 or 2, **characterised in that** the slope of the second inclined portion of the second groove with respect to the sliding plane is greater than the slope of the first inclined portion of the first groove with respect to the sliding plane.

5. Sealing device according to any one of claims 1 to 4, **characterised in that** it comprises synchronisation means, linking the two shuttles respectively equipping the two rails, such that the two shuttles are actuated simultaneously.

6. Sealing device according to claim 5, **characterised in that** said synchronisation means comprise at least a cable or shims.

7. Sealing device according to any one of claims 1 to 6, **characterised in that** the fixed section is provided with sealing means intended to be placed in contact with a periphery of said moving panel in said sealing position.

8. Sealing device according to any one of claims 1 to 6, **characterised in that** the moving panel is provided with sealing means intended to be placed in contact with a periphery of the opening of the fixed section in said sealing position.

9. Motor vehicle **characterised in that** it comprises at least one sealing device according to any one of claims 1 to 8.
